# EUROPEAN PATENT SPECIFICATION

(11) **EP 4 455 059 B1**
(45) Date of publication and mention of the grant of the patent: **01.10.2025**
(21) Application number: 24171171.2
(22) Date of filing: 19.04.2024
(51) Int. Cl.: B65G 15/14, B65G 15/22, B65G 43/08, B65G 47/31, B65B 35/24, B65B 61/18, B65B 57/04, B65B 61/24, B65B 61/28

(54) **CONVEYING APPARATUS, CAPPING MACHINE, PACKAGING PLANT AND METHOD FOR CONVEYING PACKAGES**
FÖRDERVORRICHTUNG, VERSCHLIESSMASCHINE, VERPACKUNGSANLAGE UND VERFAHREN ZUM FÖRDERN VON PACKUNGEN
APPAREIL DE TRANSPORT, MACHINE DE CAPSULAGE, INSTALLATION D'EMBALLAGE ET PROCÉDÉ DE TRANSPORT D'EMBALLAGES

(30) Priority: 26.04.2023 IT 202300008142
(43) Date of publication of application: 30.10.2024
(73) Proprietor: Tetra Laval Holdings & Finance S.A., 1009 Pully (CH)
(72) Inventor: BORTOLOTTI, Edoardo, 41123 Modena (IT); BELLESIA, Simone, 41123 Modena (IT)
(74) Representative: Tetra Pak Patent Attorneys

(56) References cited:
- EP-A1- 2 316 737
- EP-A1- 3 135 613
- WO-A1-2020/157641
- DE-A1- 19 529 139

## Description

### TECHNICAL FIELD

The present invention relates to a conveying apparatus for a treatment machine, in particular a conveying apparatus for conveying a succession of packages filled with a pourable product, in particular a pourable food product.

Advantageously, the present invention also relates to a capping machine for applying caps on packages filled with a pourable product, in particular a pourable food product, and having at least one conveying apparatus.

Advantageously, the present invention also relates to a packaging plant for producing packages filled with a pourable product, in particular a pourable food product, and having at least one conveying apparatus.

Advantageously, the present invention also relates to a method for conveying a succession of packages filled with a pourable product, in particular a pourable food product.

Advantageously, the present invention also relates to a method for applying caps to packages of a pourable product.

### BACKGROUND ART

As it is known, many liquid or pourable food products, such as fruit juice, UHT (ultra-high-temperature treated) drinks, milk, wine, tomato sauce, etc., are sold in packages made of a paper- or carton-based packaging material. A typical example of this type of packages is the parallelepiped-shaped package known as Tetra Brik Aseptic^{®}, which is made by folding and sealing a web of laminated packaging material.

The packaging material has a multilayer structure substantially comprising a base layer of fibrous material, e.g., paper or carton, covered on both sides with layers of heat-sealable polymeric material, e.g., polyethylene. In the case of aseptic packages for long-storage products, such as UHT milk, and for which storage and distribution are made in ambient temperature, the packaging material also typically comprises a layer of gas- and light-barrier material, e.g., aluminium foil, which is superimposed on a layer of heat-sealable polymeric material, and is in turn covered with another layer of heat-sealable polymeric material forming the inner face of the package eventually contacting the food product.

Packages formed from the afore-described multilayer packaging material are normally produced in fully automatic packaging plants, which at least form the packages from the multilayer packaging material and fill the packages with the pourable food product.

A typical packaging plant comprises at least a filling machine such as the Tetra Pak^{®} A3/Flex machine, which applies the form-fill-seal technology. In detail, a tube of multilayer packaging material is firstly filled with the pourable food product and then formed, sealed and cut so as to obtain a plurality of sealed pillow packs containing the pourable food product. The pillow packs are subsequently folded mechanically to form respective finished, substantially parallelepiped-shaped packages.

Once formed, the above-mentioned packages may undergo further treatments in one or more treatment machines.

E.g. a treatment machine may be arranged in a position operatively downstream from the filling machine and configured to execute one or more additional treatments on the packages. For example, the treatment machine may comprise a cap applicator for applying caps on the packages and/or a straw applicator for applying straws onto the packages.

In most cases, the filling machine and the treatment machine are connected to each other by means of a conveying apparatus.

An example of a conveying apparatus of a packaging plant comprises at least one belt conveying system having two conveyor belts, which define therebetween a passage for the packages and are configured to cooperatively advance and engage the packages from opposite lateral sides thereof. In treatment machines and/or treatment apparatuses in which packages are treated in a succession, the belt conveying system generally feeds the packages to an auxiliary conveyor having a plurality of seats and configured to convey the packages within at least one treatment apparatus comprising at least one treatment device, e.g. cap applicator, arranged along a path defined by the auxiliary conveyor.

In particular, the belt conveying system is configured to feed the packages to the auxiliary conveyor such that each package is correctly positioned and fed into a respective seat. Even though the known conveying apparatuses work satisfactorily well, a desire is felt in the sector to further improve the known conveying apparatuses.

Patent document EP3135613A1 discloses a known conveying system. In particular, patent document EP3135613A1 discloses a conveying apparatus according to the preamble of claim 1 and a method for conveying a succession of packages according to the preamble of claim 13.

### DISCLOSURE OF INVENTION

It is therefore an object of the present invention to provide a conveying apparatus for conveying a succession of packages filled with a pourable product, in particular filled with a pourable food product, along an advancement path as defined in claim 1.

Advantageously, it is another object of the present invention to provide a capping machine for applying caps on packages filled with a pourable product, in particular a pourable food product, and having at least one conveying apparatus as defined in claim 11.

Advantageously, it is another object of the present invention to provide a packaging plant for producing packages filled with a pourable product, in particular a pourable food product, and having at least one capping machine as defined in claim 12.

Advantageously, it is another object of the present invention to provide a method for conveying a succession of packages filled with a pourable product, in particular filled with a pourable food product, along an advancement path as defined in claim 13.

Advantageously, it is another object of the present invention to provide a method for applying caps to packages of a pourable product as defined in claim 15.

### BRIEF DESCRIPTION OF THE DRAWINGS

A non-limiting embodiment of the present invention will be described by way of example with reference to the accompanying drawings, in which:
- Figure 1 is a schematic view of a packaging plant having at least one conveying apparatus according to the present invention, with parts removed for clarity;
- Figure 2 is a schematic top view of a detail of the conveying apparatus of Figure 1; and
- Figure 3 is an example of speed profiles of the conveying apparatus of Figure 2.

### BEST MODES FOR CARRYING OUT THE INVENTION

Number 1 indicates as a whole a packaging plant for producing packages 2 filled with a pourable product, in particular a pourable food product, such as milk, milk drinks, yoghurt, yoghurt drinks, fruit juice, wine, tomato sauce, emulsions, beverages containing pulp, salt, sugar, and so on.

In more detail, packaging plant 1 may be configured to produce packages 2 from a multilayer packaging material.

In further detail, the multilayer packaging material may comprise at least one layer of fibrous material, such as e.g. a paper or cardboard, and at least two layers of heat-seal plastic material, e.g. polyethylene, interposing the layer of fibrous material in between one another. One of these two layers of heat-seal plastic material may define the inner face of package 2 contacting the pourable product.

Furthermore, the multilayer packaging material may also comprise a layer of gas- and light-barrier material comprising and/or consisting of a metallic material, preferentially arranged between one of the layers of heat-seal polymeric material and the layer of fibrous material.

Preferentially, the packaging material may also comprise a further layer of heat-seal polymeric material placed between the layer of gas- and light-barrier material and the layer of fibrous material.

Moreover, the multilayer packaging material may be provided in the form of a web 3.

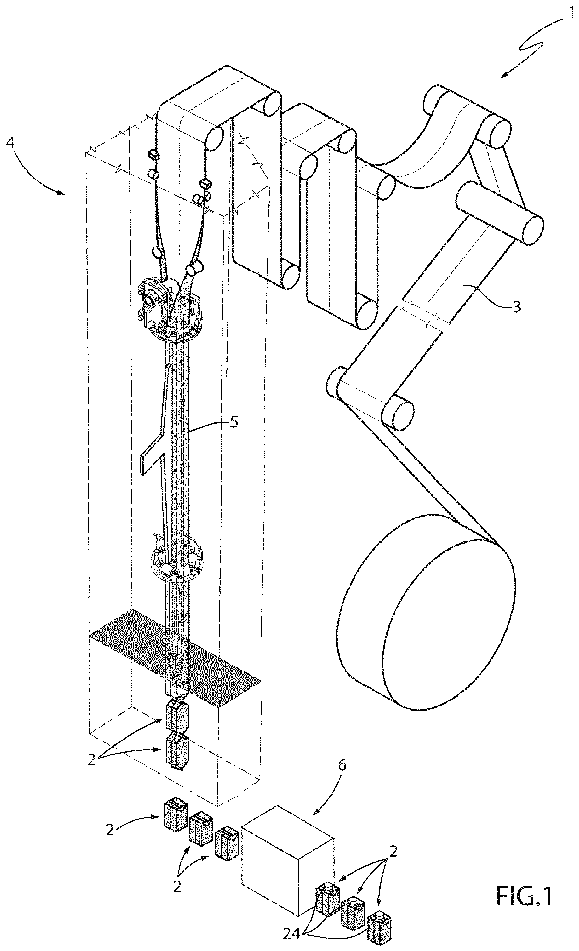

With reference to Figure 1, packaging plant 1 comprises a package forming apparatus 4 for forming packages 2, in particular for forming and filling packages 2, even in more particular for forming packages 2 from the multilayer packaging material and filling packages 2 with the pourable product. In more detail, package forming apparatus 4 may be configured to produce packages 2 and to fill packages 2 with the pourable product.

In further detail, package forming apparatus 4 may be configured to produce packages 2 by forming a tube 5 from web 3, longitudinally sealing tube 5, filling tube 5 with the pourable product and to transversally seal and cut tube 5.

Packaging plant 1 comprises at least one treatment machine 6 for treating packages 2, preferentially arranged downstream from package forming apparatus 4.

Packaging plant 1 further comprises at least one conveyor (not shown) for advancing packages 2 from package forming apparatus 4 to treatment machine 6.

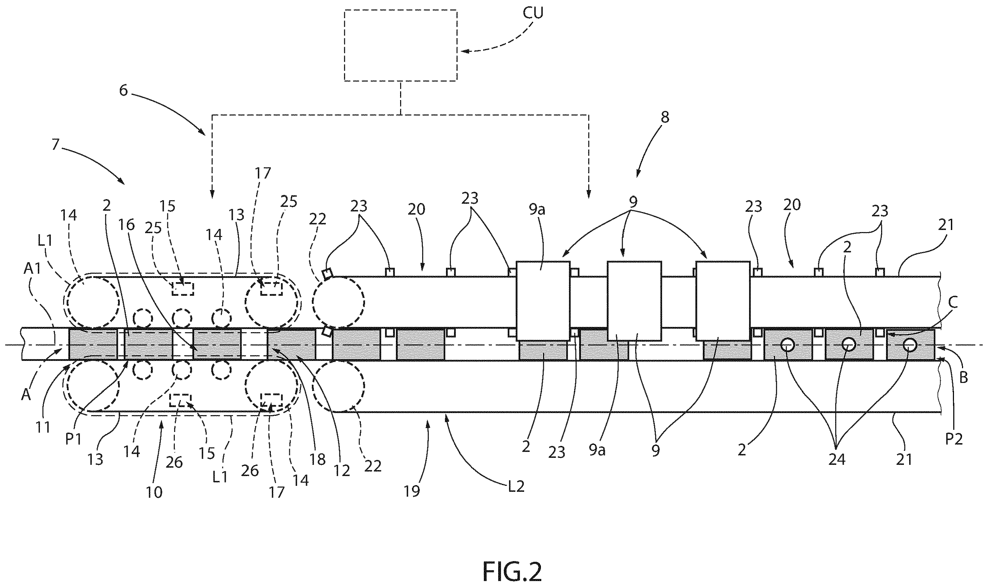

With reference to Figure 2, treatment machine 6 comprises a conveying apparatus 7 configured to convey a succession of packages 2 at least along an advancement path A. Preferentially, the conveyor may also be configured to advance the succession of packages 2 from package forming apparatus 4 to conveying apparatus 7.

Treatment machine 6 may comprise one or more treatment devices 9, each configured to execute at least one treatment on respective packages 2 (fed to the respective treatment device 9). According to the invention, the treatment machine 6 is a capping machine configured to apply caps 24 onto packages 2.

In detail, conveying apparatus 7 comprises at least a belt conveying system 10 configured to advance packages 2 along a portion A1 of advancement path A and between an inlet station 11 (at which belt conveying system 10 receives packages 2) and an outlet station 12 (at which belt conveying system 10 releases packages 2).

In further detail, belt conveying system 10 comprises at least two conveyor belts 13 spaced apart from each other so as to define a passage P1 therebetween and moving and/or advancing along respective closed loop paths L1.

The conveyor belts 13 are spaced apart along a direction transversal, preferentially perpendicular to, portion A1.

In more detail, conveyor belts 13 are configured to cooperate with packages 2 advancing along portion A1. In specific, conveyor belts 13 are configured to engage packages 2 from opposite lateral sides thereof, whilst moving and/or advancing along respective paths L1.

In particular, in use, due to the engagement of conveyor belts 13 with packages 2 and the advancement of conveyor belts 13 along the respective paths L1, packages 2 are advanced along portion A1.

Conveyor apparatus 7, preferentially belt conveying system 10, may comprise one or more motors configured to at least advance conveyor belts 13 along the respective paths L1. The one or more motors may also be configured to synchronously drive conveyor belts 13.

Preferentially, the one or more motors may be servomotors.

According to one possible embodiment, belt conveying system 10 may comprise two motors, each one coupled to one respective conveyor belt 13.

According to an alternative embodiment, belt conveying system 10 may comprise one motor and a gear mechanism configured to couple the motor to each one of conveyor belts 13.

Conveying apparatus 7, preferentially belt conveying system 10 may comprise a plurality of pulleys and/or rollers 14 around which conveyor belts 13 may be respectively wounded.

In detail, pulleys and/or rollers 14 may be operatively connected to the one or more motors so as to at least advance conveyor belts 13 along the respective paths L1 and synchronously drive conveyor belts 13.

Conveying apparatus 7 comprises a control unit CU configured to control the operation of belt conveying system 10, preferentially of conveyor belts 13, more preferentially of the one or more motors, so as to control the movement and/or advancement of conveyor belts 13 along the respective paths L1.

Belt conveying system 10 further comprises at least a first sensor device 15 arranged at a first detection station 16 placed between inlet station 11 and outlet station 12.

First sensor device 15 is configured to detect a presence of packages 2 at the first detection station 16 and to generate a first signal associated with the presence of a detected package 2 at first detection station 16. More specifically, first sensor device 16 may be configured to generate a respective first signal for each package 2 of the succession of packages 2 during advancement along portion A1 and when passing through first detection station 16.

Moreover, by knowing the moment of each package 2 passing through first detection station 16 it is possible, as it will be explained in more detail further below, to obtain a desired release of each package 2 at outlet station 12.

Additionally, first sensor device 15 is operatively connected to control unit CU and is configured to receive the respective first signals from first sensor device 15 for each package 2. Preferentially, control unit CU may be also configured to associate the respective first signal to each one of packages 2, e.g. so as to understand a relative position of packages 2 to outlet station 12 after passing first detection station 16 and during their further advancement along portion A1.

In detail, first sensor device 15 may comprise at least a photocell configured to detect the position of packages 2 at first detection station 16 and to generate the first signal.

In further detail, control unit CU is configured to accelerate and decelerate, on the basis of the first signal, conveyor belts 13, in particular such that packages 2 are released at outlet station 12 at a predetermined speed.

In specific, the predetermined speed is constant and the same for all of packages 2 of the respective succession.

According to some possible embodiments, the constant predetermined speed may be modified during operation.

According to such an embodiment, prior to the modification, all packages 2 of a first succession of packages 2 are released at the same first predetermined speed and after modification to a second predetermined speed all packages 2 of a second succession of packages 2 are released at the second predetermined speed.

Also, preferentially, control unit CU may be configured to accelerate and decelerate, on the basis of the first signal, conveyor belts 13 such that packages 2 are released at outlet station 12 at a predetermined position and/or at a predetermined distance or a multiple thereof. In such a way, they fit the seats of the auxiliary conveyor.

In more detail, control unit CU may control conveyor belts 13, preferentially the one or more motors, such that packages 2 may be subject to at least one step of accelerating and to at least one step of decelerating. Preferentially, the one step of accelerating is after or before the at least one step of decelerating.

Moreover, control unit CU may be configured to control conveyor belts 13, preferentially the one or more motors, on the basis of a leading package of the succession of packages 2 advancing at least along portion P1.

As intended herein, a leading package is defined as the package 2 of the respective succession being furthest in front along portion A1, i.e. the package 2 of the respective succession being nearest to outlet station 12 and, hence, being about to be released. In other words, leading package is the package 2 advancing along portion A1 upstream from the other respective packages 2.

It should be noted that once a package 2 defining the leading package is released at outlet station 12, the subsequent package 2 becomes the leading package.

This means each package 2 of a respective succession defines a leading package at one point.

Moreover, control unit CU may be configured to control conveyor belts 13 on the basis of the respective first signal originating from the leading package passing through first detection station 16.

E.g. it may occur that the respective first signal of the leading package was generated while the respective package 2 passed first detection station 16 while another package 2 has been the leading package. Still control unit CU can correctly associate the respective first signal to the leading package.

More specifically, control until CU may be configured to associate to each package 2 a respective first signal having been generated, in use, by first sensor device 15 while the respective package 2 is (temporarily) present at first detection station 16 and to control conveyor belts 13 on the basis of the respective first signal when the respective package 2 becomes the leading package.

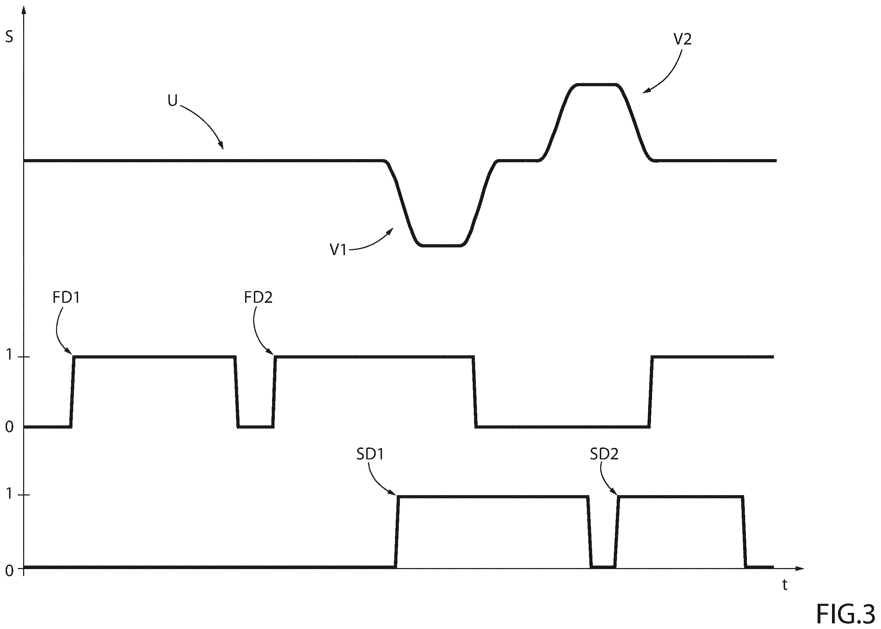

In detail, prior to defining a respective leading package, each package 2 may be subject to one or more steps of accelerating and to one or more steps of decelerating, in particular due to control unit CU controlling conveyor belts 13 on the basis of the first signals associated to packages 2, which have been leading packages prior to the current leading package. On the contrary, once defining a respective leading package, each package 2 may undergo only one step of accelerating and only one step of decelerating before, as further explained hereinbelow by referring to Figure 3.

Moreover, control unit CU may also be configured to control conveyor belts 13 in dependence of the respective first signal associated to each leading package and in dependence of a distance each package 2 may have travelled along portion A1 after having been detected at first detection station 16 and prior to become the leading package and/or in dependence of the one or more steps of accelerating and the one or more steps of decelerating which the leading package was subject to prior to becoming the leading package.

According to some preferred non-limiting embodiments, control unit CU may also be configured to control conveyor belts 13, preferentially the one or more motors, such that packages 2 are released at outlet station 12 at an equidistant distance or a multiple of the equidistant distance from one another.

According to some preferred non-limiting embodiments, a distance between first detection station 16 and outlet station 12 may be such that a package 2 may always undergo at least the one step of accelerating and the one step of decelerating before reaching outlet station 12.

Preferentially, the distance between first detection station 16 and outlet station 12 may be greater than a predetermined length of each package 2 along advancement path A and/or portion A1.

As intended herein, the predetermined length of each package 2 refers to a dimension that is parallel to portion A1 and/or corresponding to an extension of the portion of each package 2 being in contact with conveyor belts 13.

Preferentially, the distance between first detection station 16 and outlet station 12 may be chosen such that one may avoid adjusting the exact position of first detection station 16 even after a format change.

According to some possible non-limiting embodiments, the distance between first detection station 16 and outlet station 12 may be adjusted during a format change.

With reference to the example illustrated in Figure 2 and according to a preferred non-limiting embodiment, first detection station 16 may be located at a (substantially) centred position between inlet station 11 and outlet station 12 such that the distance between inlet station 11 and first detection station 16 and the distance between first detection station 16 and outlet station 12 is (substantially) the same.

Advantageously, by locating first detection station 16 at a substantially centred position between inlet station 11 and outlet station 12, the distance between first detection station 16 and outlet station 12 may not undergo any adjustment operations after or during a format change.

Preferentially, belt conveying system 10 also comprises a second sensor device 17 arranged at a second detection station 18, preferentially coinciding with outlet station 12.

Second sensor device 17 is configured to detect a presence of a package 2 at second detection station 18, in particular a package 2 about to be released, more particularly a package 2 defining a leading package, and to generate a second signal associated with the presence of the detected package 2 at second detection station 18. Preferentially, second sensor device 17 may be configured to detect a package 2, which, in use, has not been detected by first sensor device 15. I.e., in use, first sensor device 15 could not generate a respective first signal associated to the non-detected package 2 and, accordingly, control unit CU cannot control conveyor belts 13 such to correctly release the non-detected package 2.

In more detail, second sensor device 17 may comprise at least a photocell.

As illustrated in Figures 2, first sensor device 15 and/or second sensor device 17 may comprise a respective emitting photocell 25 and a respective receiving photocell 26 arranged on opposite lateral sides of belt conveying system 10. In particular, each emitting photocell 25 may be configured to emit an electromagnetic signal along a further direction transversal to portion A1.

Moreover, each receiving photocell 26 may be configured to receive the respective electromagnetic signal. Preferentially, emitting photocells 25 and receiving photocells 26 may be LED photocells or laser photoelectric sensors.

According to a preferred non-limiting embodiment of the present invention, emitting photocells 25 and receiving photocells 26 may be laser photocells.

In detail, first sensor device 15 and/or second sensor device 17 may be operatively connected to control unit CU.

In more detail, control unit CU may control belt conveying system 10, preferentially conveyor belts 13, even more preferentially the one or motors, so as to accelerate and/or decelerate, on the basis of also the second signal, conveyor belts 13 such that each package 2, in particular the package 2 about to be released, more particularly a package 2 defining a leading package, is released at outlet station 12 at the predetermined speed.
In further detail, in the event that the succession of packages 2 may comprise a queue of packages 2 in which two or more packages 2 advance in contact with one another, first sensor device 15 may not distinguish the presence of all packages 2 of a respective queue at first detection station 16. Thus, first sensor device 15 may not detect one or more packages 2 at the first detection station 16.

Advantageously, second sensor device 17 may serve as a safety device configured to detect the presence of packages 2 at outlet station 12, in the event a respective package queue prevents first sensor device 15 from detecting packages 2 at first detection station 16. In particular, on the basis of the second signal, control unit CU may be able to still control conveyor belts 13 so as to correctly release packages 2 at the predetermined speed, and release them at the equidistant distance or a multiple of the equidistant distance from one another. Regardless the position at the inlet station 11, whether the packages are on a queue or positioned randomly, the release on the downstream auxiliary conveyor 19 is always at equidistant distance or a multiple of the equidistant distance from one another.

With reference to Figure 2, conveying apparatus 7 may further comprise an auxiliary conveyor 19 configured to receive the succession of packages 2 from belt conveying system 10 and to convey and/or advance the respective packages 2 along an auxiliary path B to and within treatment apparatus 8. Preferentially, treatment apparatus 8 may be arranged downstream from belt conveying system 10.

In detail, auxiliary conveyor 19 may comprise a plurality of seats 20, each seat 20 advancing at least along a path C parallel to auxiliary path B and being configured to host at least one respective package 2. In further detail, seats 20 may be equidistant from one another. Preferentially, a distance between seats 20 may define the equidistant distance.

In more detail, auxiliary conveyor 19 may be configured to advance seats 20 at least along path C at a defined advancement speed.

Auxiliary conveyor 19 may comprise two conveyor belts 21 spaced apart from each other so as to define a passage P2 therebetween and moving and/or advancing along respective closed loop paths L2.

Preferentially auxiliary conveyor 19 may also comprise one or more respective motors configured to at least advance conveyor belts 21 along the respective paths L2 and to, preferentially, also drive conveyor belts 21 synchronously.

Preferentially auxiliary conveyor 19 may further comprise at least two pulleys and/or rollers 22 around which conveyor belts 21 may be respectively wounded.

In detail, pulleys and/or rollers 22 may be operatively connected to the respective one or more motors so as to at least advance conveyor belts 13 along the respective paths L1 and synchronously drive conveyor belts 13.

Moreover, at least one of the conveyor belts 21 may comprise a plurality of protruding elements 23 configured to engage with packages 2 advancing along auxiliary path B.

According to some possible non-limiting embodiments, conveyor belts 21 may comprise teeth or protruding elements 23, every two consecutive protruding elements 23 defining a respective seat 20 therebetween.

Preferentially, every two consecutive protruding elements 23 may define a respective seat 20 therebetween.

In further detail, two consecutive protruding elements 23 may be configured to cooperate with a package 2 being advanced to the seat 20 defined therebetween so as to keep the package 2 in place as the package 2 advances along auxiliary path B to or within treatment apparatus 8.

According to a preferred embodiment, belt conveying system 10 may be configured to distance packages 2 between each other and/or align packages 2 with respect to seats 20 such that each package 2 being released at outlet station 12 is fed to a respective seat 20.

In detail, belt conveying system 10 may be configured to align packages 2 with respect to seats 20 such that packages 2 are released relative to one another at a (equidistant) distance which is equal to a (equidistant) distance or to a multiple of the distance between seats 20.

Moreover, belt conveying system 10 may be configured such that the predetermined speed is set in dependence of the advancement speed. Preferentially, belt conveying system 10 may be configured such that the predetermined speed substantially corresponds (or equals) to the advancement speed.

According to some preferred non-limiting embodiments, the advancement speed may be set in dependence of a desired productivity.

Preferentially, first sensor device 15 and/or second sensor device 17 may be configured to detect the position of each package 2 relative to outlet station 12 so as to check if the position of the package 2 being detected is aligned with a respective seat 20.

Preferentially, belt conveying system 10 may be configured such that a package 2 advancing along the portion A1 is subject to at least the one step of accelerating and to the one step of decelerating if the position of the package 2 detected by at least first sensor device 15 is not aligned with a respective seat 20.

In detail and with reference to Figure 3, control unit CU is configured to move and/or advance conveyor belts 13 according to a speed profile S generated on the basis of at least the first signal. As intended herein, a speed profile may be a variation of speed with respect to time.

In further detail, speed profile S may result from the sum of a base speed profile U associated to conveyor belts 13 and a plurality of correction speed profiles, each correction speed profile being associated to a respective package 2 defining a leading package.

According to some preferred non-limiting embodiments, base speed profile U may correspond to the predetermined speed, and preferentially may be constant over time.

In more detail, each leading package may be subject to only one step of accelerating and to only one step of decelerating on the basis of the respective correction speed profile. In particular, in this way, it is possible to correctly align the respective package 2 for release and to bring the speed of the package 2 back to the predetermined speed.

According to a preferred embodiment of the present invention, control unit CU may be configured to compute a correction speed profile for a respective leading package such that each leading package is subject to the one step of accelerating and to the one step of decelerating in order to be released at the outlet station at the predetermined speed. Control unit CU may be configured to compute a correction speed profile as a function of the first signal detected by first sensor device 15 and/or the second signal detected by second sensor device 17.

### In particular, each correction speed profile

In detail, as control unit CU controls conveyor belts 13 based on the leading packages, the one step of accelerating and the one step of decelerating each leading package may be subject to, on the basis of the respective correction speed profile, may affect the other packages 2 of the respective succession (not defining a leading package). This translates to the fact that the packages 2 not defining a leading package may be subject to one or more steps of acceleration and to one or more steps of deceleration as a result of the correction speed profiles computed for the leading packages, and to the fact that the correction speed profile computed for a package 2 defining a leading package may at least partially be dependent on the correction speed profiles computed for the preceding/former leading packages 2, i.e. the packages 2 that have once defined a respective leading package and have been released at outlet station at the predetermined speed, on the basis of the respective correction speed profile.

Preferentially, a correction speed profile computed for a package 2 of a succession of packages 2 (leading package) may be applied on conveyor belts 13, in particular on base speed profile U, when the preceding package 2 of the respective succession (preceding/former leading package) is released at outlet station 12.

In more detail, speed profile S may be the sum of base speed profile U and the correction speed profiles obtained with regard to packages 2 of the succession of packages **2.**

Base speed profile U may comprise a portion along which conveyor belts 13 move at a constant speed, preferentially the predetermined speed.

Each correction speed profile may be generated on the basis of one respective package, preferentially the package 2, which defines the leading package at a specific moment.

In particular, each correction speed profile may be computed by control unit CU, on the basis of the respective first signal, so as to align the respective package 2 to a seat 20 and to release the respective package 2 at the predetermined speed. In detail, each correction speed profile may be applied by control unit CU to base speed profile U so as to align the respective package 2 to the respective seat 20 and release the respective package 2 at the predetermined speed. Preferentially, each correction speed profile may be applied by the one or more motors, controlled by control unit CU, on conveyor belts 13 so as to align each package 2 to the respective seat 20 and to release each package 2 at the predetermined speed.

More particularly, each correction speed profile may be computed by control unit CU and applied to base speed profile U, preferentially on conveyor belts 13 by means of the one or more motors, such that each package 2 when being the leading package is subject to only one step of accelerating and to only one step of decelerating.

In further detail, each package 2 is released at outlet station 12 at the predetermined speed after the respective correction speed profile is applied to conveyor belts 13.

It should be noted that speed profile S can be different from the one shown in the specific example, both in terms of magnitude in time or velocity.

Moreover, Figure 3 also schematically illustrates operation of conveying apparatus 7, preferentially of belt conveying system 10, under consideration of the interplay between the detection of each package 2 at first detection station 16 and the control of conveyor belts 13. Additionally, also the signal of second detection sensor 17 is shown.

In the specific example of Figure 3, speed profile S, the signal of first detection sensor 15 and of second detection sensor 17 is discussed with reference to a first package 2 and a second package 2 being arranged in succession and with the first package 2 advancing upstream along advancement path A with respect to the second package 2.

With reference to Figure 3 first package 2 starts to be detected at first detection station 16 leading to a signal of first detection station 16 as indicated with FD1. As the first package 2 has an extension along a direction parallel to portion A1, the signal of first detection sensor 15 prevails for a certain time (which is dependent on the speed with which the first package 2 advances). After the first package 2 as a hole has passed first detection station 16, the signal of first detection sensor 15 changes again as not detecting the first package 2 anymore.

In order to correctly release the first package 2 from belt conveying system 10, control unit CU controls conveyor belts 13 according to correction speed profile V1, which has been determined in function of the signal of first detection sensor 15 attributed to the first package 2. In the specific case, correction speed profile V1 is such that at first a step of decelerating and then a step of accelerating is executed (when the first package 2 is the leading package). Additionally, correction speed profile V1 even comes along with a section without decelerating and without accelerating the first package 2.

In the meantime, also the second detection sensor 17 generates a signal SD1 as detecting the presence of the first package 2 at second detection station 18.

Additionally, first detection sensor 15 detects the presence of the second package 2 at first detection station 16 resulting in the generation of signal FD2.

Once, the first package 2 has been release, the second package 2 becomes the leading package and control unit CU controls speed profile S in dependence of signal FD2. In particular, a correction speed profile V2 is applied which comprises at first a step of accelerating and then a step of decelerating.

As well, second sensor device 17 registers the presence of the second package 2 at second detection station 18 generating signal SD2.

As indicated in Figure 3 due to the extension of each package 2 along portion A1, both first detection device 15 and second detection device 17 detect the presence of packages 2 for respective times, which each package 2 needs to pass through first detection station 16 or second detection station 18 as a whole. Additionally, the respective detections also depend on the specific accelerations and decelerations conveyor belts 13 are subject to. Accordingly, packages 2 may be detected by first detection device 15 or second detection device 17 for different time periods.

With reference to Figure 2 and according to a preferred embodiment, each treatment device 9 may be arranged along a portion of auxiliary path B. Preferentially, treatment devices 9 may be arranged one after the other along advancement path B. More specifically and according to the specific disclosed embodiment each treatment device 9 may comprise and/or consist of a cap applicator device 9a configured to apply a cap 24 to respective packages 2 fed to cap applicator device 9a.

Preferentially, treatment devices 9, more preferentially cap applicator devices 9a, may move and/or advance along a path parallel to advancement path B.

According to some non-limiting embodiments (not shown), each treatment device 9 may comprise and/or consist of a straw applicator device configured to apply at least one straw to packages 2 fed to the respective straw applicator device.

According to some non-limiting embodiments (not shown), each treatment device 9 may comprise and/or consist of a cardboard packer configured to pack a plurality of packages 2 into a carton.

According to some non-limiting embodiments (not shown), each treatment device 9 may comprise and/or consist of an accumulator configured to store the packages 2.

According to an alternative embodiment (not shown), each treatment device 9 may comprise and/or consist of a decoration applicator device configured to apply and/or stamp at least one decoration on each package 2 fed to the respective decoration applicator device.

In use, packaging plant 1 produces packages 2 filled with the pourable product.

In particular, package forming apparatus 4 forms packages 2, delivers packages 2 to treatment machine 6 and conveying apparatus 7 advances packages 2 to and/or within treatment apparatus 8.

In more detail, package forming apparatus 4 forms tube 5 from web 3, longitudinally seals tube 5 and shapes, transversally seals and transversally cuts tube 5 so as to obtain packages 2.

Packages 2 are then transferred to inlet station 11 by means of a conveyor, preferentially conveyor apparatus 7, and the operations of conveying apparatus 7 commence.

During the operation of conveying apparatus 7, a succession of packages 2 are conveyed firstly along advancement path A and subsequently along auxiliary path B.

The method for conveying a succession of packages 2 at least along advancement path A comprises at least the steps of:
- preferentially, feeding packages 2 to inlet station 11;
- advancing packages 2 by means of conveyor belts 13 along advancement path A;
- detecting a presence of each package 2 at first detection station 16;
- generating a first signal associated with the presence of a detected package 2 at first detection station 16;
- controlling, on the basis of at least the first signal, conveyor belts 13 such that each package 2 is subject to at least one step of accelerating and/or one step of decelerating; and
- releasing packages 2 at outlet station 12 at the predetermined speed.

Preferentially, the step of advancing is executed during the step of detecting, the step of generating and the step of controlling.

The method also comprises the steps of:
- further detecting at second detection station 18 a presence of each package 2 about to be released, whilst the package 2 is being advanced along portion A1;
- further generating a second signal associated with the presence of a detected package 2
- preferentially, further controlling on the basis of the second signal, conveyor belts 13 such that each package 2 about to be released is subject to one step of accelerating and/or to one step of decelerating.

Additionally, the method may comprise the steps of:
- further advancing packages 2 being released at outlet station 12 to auxiliary conveyor 19;
- further feeding each package 2 to a respective seat 20 advancing at the advancement speed along path C;
- conveying packages 2 along auxiliary path B to and within treatment apparatus by means of auxiliary conveyor 19;
- executing at least one treatment on each package 2 within the treatment apparatus, by means of at least one treatment device 9; e.g. the treatment comprising and/or consisting in at least applying at least a cap 24 to each package 2.

Preferentially, the step of executing is executed during the step of further advancing.

In further detail, during the step of feeding, inlet conveyor 11 feeds packages 2 to inlet station 11 along portion A1 and within passage P1.

During the step of advancing, conveyor belts 13 move and/or advance along respective paths L1, in particular while being moved and/or advanced by the one or more motors, and while engaging packages 2 advancing along portion A1 from opposite lateral sides thereof.

Packages 2 of the respective succession are then advanced to first detection station 16.

During the step of detecting, first sensor device 15 detects at first detection station 16 the presence of each package 2 so as to check if the package 2 being detected is aligned to a respective seat 20.

After the step of detecting, during the step of generating, first sensor device 15 generates a first signal associated with the presence of the detected package 2 at first detection station 16.

First signal is then sent to control unit CU.

During the step of controlling, control unit CU computes, on the basis of the first signal, a correction speed profile associated to a respective package 2 so as to align the package 2 to a respective seat 20, accordingly.

During the step of controlling, control unit CU adds the correction speed profile to base speed profile U of conveyor belts 13, i.e. the correction speed profile is applied to conveyor belts 13, in particular by the one or motors controlled by control unit CU.

In further detail, conveyor belts 13 accelerate and/or decelerate, in particular are controlled by the one or more motors to accelerate and/or decelerate, such that each package 2 is subject to the one step of accelerating and/or to the one step of decelerating in order to be released at outlet station 12 at the predetermined speed.

The package 2 may undergo one step of accelerating immediately before or after one step of decelerating.

After being accelerated/decelerated to the predetermined speed, during the step of advancing, the package 2 advances along portion A1 to second detection station 18.

During the step of further detecting, second sensor device 17 detects a presence of the package 2, which is about to be released, at second detection station 18 so as to correctly release the detected package 2 at outlet station 12 in the event that the detected package 2 had not been detected by first sensor device 15.

After the step of further detecting, during the step of further generating, second sensor device 17 generates a second signal associated with the presence of the detected package 2 at second detection station 18.

Second signal is then sent to control unit CU.

During the step of further controlling, control unit CU computes, on the basis of the second signal, a correction speed profile for a respective package 2 so as to align the package 2 to a respective seat 20.

During the sub-step of further applying, control unit CU adds the correction speed profile to base speed profile U of conveyor belts 13, i.e. the correction speed profile is applied to conveyor belts 13, in particular by the one or motors controlled by control unit CU, such that each package 2 undergoes one step of accelerating and/or one step of decelerating.

The step of further applying is not executed if the package 2 has been successfully aligned to a respective seat 20 during the step of controlling.

During the step of releasing, packages 2 are released at outlet station 12 at the predetermined speed.

During the step of further feeding, each package 2 being released at outlet station 12 is fed to a respective seat 20 advancing at advancement speed along auxiliary path B.

In detail, whilst being fed to a respective seat 20, packages 2 are advanced along auxiliary path B by auxiliary conveyor 19, in particular by conveyor belts 21.

During the step of further advancing, conveyor belts 21 move and/or advance along respective paths L2, in particular while being controlled to move and/or advance by the one or more motors, and engage packages 2 advancing along auxiliary path B from opposite lateral sides thereof.

Packages 2 of the respective succession are then advanced to and within treatment apparatus 8.

Finally, during the step of executing, each package 2 undergoes one treatment by means of one treatment device 9 comprising and/or consisting of one cap applicator device 9a. In detail, a cap 24 is applied to a respective package 2 advancing along auxiliary path B by means of a cap applicator device 9a.

The advantages of packing plant 1 and/or conveying apparatus 7 according to the present invention will be clear from the foregoing description.

In detail, conveying apparatus 7, in particular belt conveying system 10, allows successions of packages 2 to be fed to inlet station 11 in a flexible and undefined manner without the need of pre-grouping packages 2 in compacted lines by means of deceleration rollers.

Furthermore, belt conveying system 10 allows to align packages 2 to seats 20 in such a manner that consecutive packages 2 of a respective succession can be fed to nonconsecutive seats 20.

Additionally, in the event that there is a queue of packages 2 preventing first sensor device 15 from detecting packages 2 at first detection station 16, second sensor device 17 operates as a safety system/control measure allowing to detect the presence of a package 2 at outlet station 12 and to correctly position the detected package 2 relative to a seat 20 shortly before the detected package 2 is released.

Clearly, changes may be made to packaging plant 1 and/or conveying apparatus 7 as described herein without, however, departing from the scope of protection as defined in the accompanying claims.

## Claims

1. A conveying apparatus (7) for conveying a succession of packages (2) of a pourable product along at least an advancement path (A); the conveying apparatus (7) comprising:
- at least a belt conveying system (10) configured to advance the packages (2) along a portion (A1) of the advancement path (A) and between an inlet station (11) at which the belt conveying system (10) receives the packages (2) and an outlet station (12) at which the belt conveying system (10) releases the packages (2); and
- a control unit (CU) configured to control operation of the belt conveying system (10);
wherein the belt conveying system (10) comprises two conveyor belts (13) spaced apart from each other, advancing along respective paths (L1) and being configured to engage the packages (2) advancing along the portion (A1) of the advancement path (A) from opposite lateral sides thereof;
- at least a first sensor device (15) configured to detect at a first detection station (16) positioned between the inlet station (11) and the outlet station (12) a presence of a package (2) and to generate a first signal associated with the presence of the detected package (2);
wherein the control unit (CU) is configured to accelerate and/or decelerate the conveyor belts (13) on the basis of the first signal
**characterized in that** the conveying apparatus (7) comprises a second sensor device (17) arranged at a second detection station (18) and configured to detect a presence of a package (2) about to be released at the outlet station (12) and to generate a second signal associated with the presence of the package (2) at the outlet station (12).

2. The conveying apparatus (7) according to claim 1, wherein the control unit (CU) is configured to accelerate and/or decelerate the conveyor belts (13) such that the detected package (2) is released at the outlet station (12) at a predetermined speed.

3. The conveying apparatus (7) according to claim 2, wherein the predetermined speed is the same for each one of the packages (2) of said succession, which are detected by the first sensor device (15).

4. The conveying apparatus (7) according to claim 3, wherein the leading package is subject to only one step of accelerating and one step of decelerating.

5. The conveying apparatus (7) according to any one of the preceding claims 2 to 4, wherein the belt conveying system (10) comprises one or more motors configured to advance the conveyor belts (13) along the respective paths (L1) ;
wherein the control unit (CU) is configured to control the one or more motors such that, in use, the one or more motors advance the conveyor belts (13) in a manner that each package (2) is released at the outlet station (12) at the predetermined speed and/or that each package (2) is subject to at least one step of accelerating and one step of decelerating.

6. The conveying apparatus (7) according to any one of the preceding claims, wherein the second detection station (18) substantially coincides with the outlet station (12).

7. The conveying apparatus (7) according to any one of the preceding claims, further comprising the packages (2) of said succession,
wherein each package (2) has a predetermined length along the advancement path (A);
wherein a distance between the first detection station (16) and the outlet station (12) is greater than the predetermined length of each package (2).

8. The conveying apparatus (7) according to any one of the preceding claims, wherein the conveying apparatus (7) comprises an auxiliary conveyor (19) having a plurality of seats (20), each seat (20) being configured to host at least one respective package (2), and being configured to advance the seats (20) along an auxiliary path (19);
wherein the belt conveying system (10) is configured to align the packages (2) with respect to the seats (20) such that each package (2) being released at the outlet station (12) is fed to a respective seat (20).

9. The conveying apparatus (7) according to claim 8,
wherein the control unit (CU) is configured to accelerate and/or decelerate the conveyor belts (13) such that the detected package (2) is released at the outlet station (12) at a predetermined speed, wherein the auxiliary conveyor (19) is configured to advance the seats (20) at a defined advancement speed;
wherein the belt conveying system (10) is configured such that the predetermined speed substantially corresponds to the defined advancement speed.

10. The conveying apparatus (7) according to claim 8 or 9, wherein each package (2) is released relative to one another at a distance which is equal to a distance or a multiple of the distance between the seats (20).

11. Capping machine (6) for applying caps (24) on packages (2) filled with a pourable product, the capping machine (6) comprises:
- a conveying apparatus (7) according to any one of the preceding claims; and
- one or more cap applicator devices (9a) configured to apply at least one cap (24) to each package (2);
wherein the one or more cap applicator devices (9a) is arranged downstream from the belt conveying system (10).

12. Packaging plant (1) for producing packages (2) filled with a pourable product, the packaging plant (1) comprising:
- a package forming apparatus (4) for forming the packages (2) and filling the packages (2) with the pourable product;
- at least one capping machine (6) according to claim 11.

13. Method for conveying a succession of packages (2) of a pourable product along at least an advancement path (A), the method comprising the steps of:
- advancing the packages (2) along a portion (A1) of the advancement path (A) and between an inlet station (11) and an outlet station (12) by means of two conveyor belts (13) spaced apart from each other and engaging the packages (2) from opposite lateral sides thereof;
- detecting at a first detection station (15) between the inlet station (11) and the outlet station (12) a presence of a package (2) at the first detection station (15); and
- generating a first signal associated with the presence of a detected package (2) at the first detection station (15);
- controlling, on the basis of at least the first signal, the conveyor belts (13);
- releasing the packages (2) at the outlet station (12),
**characterized in** further comprising the following steps:
- detecting a presence of a package (2) about to be released at the outlet station (12), and
- generating a second signal associated with the presence of the package (2) at the outlet station (12),
wherein the conveyor belts (13) are controlled also as a function of the second signal.

14. Method according to claim 13, wherein the conveyor belts (13) are controlled so as to release each package (2) at the outlet station (12)at a predetermined speed.

15. Method for applying caps (24) to packages (2) of a pourable product comprising the method for conveying the packages (2) according to any one of the preceding claims from 13 to 14, the method for conveying further comprising the steps of:
- advancing the packages (2) being released at the outlet station (12) to an auxiliary conveyor (19); the auxiliary conveyor (19) having a plurality of seats (20) advancing at a defined advancement speed along at least an auxiliary path (B);
- feeding each package (2) to a respective seat (20);
- advancing the packages (2) to and within a capping apparatus (8) by means of the auxiliary conveyor (19);
wherein the method for applying caps further comprises the step of:
- applying a respective cap (24) on each package (2) by means of at least one cap applicator device (9a).

## Patentansprüche

1. Fördervorrichtung (7) zum Fördern einer Abfolge von Packungen (2) eines gießfähigen Produkts entlang mindestens einer Vorschubbahn (A), wobei die Fördervorrichtung (7) Folgendes umfasst:
- mindestens ein Bandfördersystem (10), das dazu ausgestaltet ist, die Packungen (2) entlang eines Abschnitts (A1) der Vorschubbahn (A) und zwischen einer Einlassstation (11), an der das Bandfördersystem (10) die Packungen (2) aufnimmt, und einer Auslassstation (12), an der das Bandfördersystem (10) die Packungen (2) freigibt, vorzuschieben, und
- eine Steuereinheit (CU), die zur Steuerung des Betriebs des Bandfördersystems (10) ausgestaltet ist, wobei das Bandfördersystem (10) zwei Förderbänder (13) umfasst, die voneinander beabstandet sind, entlang jeweiliger Bahnen (L1) vorrücken und dazu ausgestaltet sind, die Packungen (2) in Eingriff zu nehmen, die entlang des Abschnitts (A1) der Vorschubbahn (A) von gegenüberliegenden lateralen Seiten davon vorrücken,
- mindestens eine erste Sensorvorrichtung (15), die dazu ausgestaltet ist, das Vorliegen einer Packung (2) an einer zwischen der Einlassstation (11) und der Auslassstation (12) positionierten ersten Detektionsstation (16) zu detektieren und ein dem Vorliegen der detektierten Packung (2) zugeordnetes erstes Signal zu erzeugen,
wobei die Steuereinheit (CU) dazu ausgestaltet ist, die Förderbänder (13) auf der Grundlage des ersten Signals zu beschleunigen und/oder zu verzögern,
**dadurch gekennzeichnet, dass** die Fördervorrichtung (7) eine zweite Sensorvorrichtung (17) umfasst, die an einer zweiten Detektionsstation (18) angeordnet und dazu ausgestaltet ist, ein Vorliegen einer Packung (2), die an der Auslassstation (12) freizugeben ist, zu detektieren und ein zweites Signal zu erzeugen, das dem Vorliegen der Packung (2) an der Auslassstation (12) zugeordnet ist.

2. Fördervorrichtung (7) nach Anspruch 1, wobei die Steuereinheit (CU) dazu ausgestaltet ist, die Förderbänder (13) so zu beschleunigen und/oder zu verlangsamen, dass die detektierte Packung (2) an der Auslassstation (12) mit einer vorbestimmten Geschwindigkeit freigegeben wird.

3. Fördervorrichtung (7) nach Anspruch 2, wobei die vorbestimmte Geschwindigkeit für jede der von der ersten Sensorvorrichtung (15) detektierten Packungen (2) der Abfolge gleich ist.

4. Fördervorrichtung (7) nach Anspruch 3, wobei die vordere Packung nur einem Schritt des Beschleunigens und einem Schritt des Verlangsamens unterliegt.

5. Fördervorrichtung (7) nach einem der vorhergehenden Ansprüche 2 bis 4, wobei das Bandfördersystem (10) einen oder mehrere Motoren umfasst, die zum Vorschub der Förderbänder (13) entlang der jeweiligen Bahnen (L1) ausgestaltet sind,
wobei die Steuereinheit (CU) dazu ausgestaltet ist, den einen oder die mehreren Motoren so zu steuern, dass der eine oder die mehreren Motoren im Gebrauch die Förderbänder (13) so vorschieben, dass jede Packung (2) an der Auslassstation (12) mit der vorbestimmten Geschwindigkeit freigegeben wird und/oder dass jede Packung (2) mindestens einem Schritt des Beschleunigens und einem Schritt des Verlangsamens unterliegt.

6. Fördervorrichtung (7) nach einem der vorhergehenden Ansprüche, wobei die zweite Detektionsstation (18) im Wesentlichen mit der Auslassstation (12) zusammenfällt.

7. Fördervorrichtung (7) nach einem der vorhergehenden Ansprüche, ferner umfassend die Packungen (2) der Abfolge,
wobei jede Packung (2) eine vorbestimmte Länge entlang der Vorschubbahn (A) aufweist,
wobei ein Abstand zwischen der ersten Detektionsstation (16) und der Auslassstation (12) größer als die vorbestimmte Länge jeder Packung (2) ist.

8. Fördervorrichtung (7) nach einem der vorhergehenden Ansprüche, wobei die Fördervorrichtung (7) einen Hilfsförderer (19) mit einer Vielzahl von Sitzen (20) umfasst, wobei jeder Sitz (20) zur Aufnahme mindestens einer jeweiligen Packung (2) ausgestaltet ist sowie dazu ausgestaltet ist, die Sitze (20) entlang einer Hilfsbahn (19) vorzuschieben,
wobei das Bandfördersystem (10) dazu ausgestaltet ist, die Packungen (2) so bezüglich der Sitze (20) auszurichten, dass jede an der Auslassstation (12) freigegebene Packung (2) einem jeweiligen Sitz (20) zugeführt wird.

9. Fördervorrichtung (7) nach Anspruch 8,
wobei die Steuereinheit (CU) dazu ausgestaltet ist, die Förderbänder (13) zu beschleunigen und/oder zu verlangsamen, so dass die detektierte Packung (2) an der Auslassstation (12) mit einer vorbestimmten Geschwindigkeit freigegeben wird, wobei der Hilfsförderer (19) zum Vorschub der Sitze (20) mit einer definierten Vorschubgeschwindigkeit ausgestaltet ist,
wobei das Bandfördersystem (10) so ausgestaltet ist, dass die vorbestimmte Geschwindigkeit im Wesentlichen der definierten Vorschubgeschwindigkeit entspricht.

10. Fördervorrichtung (7) nach Anspruch 8 oder 9, wobei jede Packung (2) mit einem Abstand zueinander freigegeben wird, der gleich einem Abstand oder einem Vielfachen des Abstands zwischen den Sitzen (20) ist.

11. Verschließmaschine (6) zum Anbringen von Kappen (24) auf mit einem gießfähigen Produkt gefüllten Packungen (2), wobei die Verschließmaschine (6) Folgendes umfasst:
- eine Fördervorrichtung (7) nach einem der vorhergehenden Ansprüche und
- eine oder mehrere Kappenanbringvorrichtungen (9a), die zum Anbringen mindestens einer Kappe (24) an jeder Packung (2) ausgestaltet sind,
wobei die eine oder die mehreren Kappenanbringvorrichtungen (9a) stromabwärts von dem Bandfördersystem (10) angeordnet sind.

12. Verpackungsanlage (1) zum Herstellen von mit einem gießfähigen Produkt gefüllten Packungen (2), wobei die Verpackungsanlage (1) Folgendes umfasst:
- eine Packungsbildungsvorrichtung (4) zum Bilden der Packungen (2) und zum Füllen der Packungen (2) mit dem gießfähigen Produkt,
- mindestens eine Verschließmaschine (6) nach Anspruch 11.

13. Verfahren zum Fördern einer Abfolge von Packungen (2) eines gießfähigen Produkts entlang mindestens einer Vorschubbahn (A), wobei das Verfahren die folgenden Schritte umfasst:
- Vorschieben der Packungen (2) entlang eines Abschnitts (A1) der Vorschubbahn (A) und zwischen einer Einlassstation (11) und einer Auslassstation (12) mittels zweier Förderbänder (13), die voneinander beabstandet sind und die Packungen (2) von gegenüberliegenden lateralen Seiten davon in Eingriff nehmen,
- an einer ersten Detektionsstation (15) zwischen der Einlassstation (11) und der Auslassstation (12) Detektieren eines Vorliegens einer Packung (2) an der ersten Detektionsstation (15) und
- Erzeugen eines ersten Signals, das dem Vorliegen einer detektierten Packung (2) an der ersten Detektionsstation (15) zugeordnet ist,
- Steuern der Förderbänder (13) auf der Grundlage mindestens des ersten Signals,
- Freigeben der Packungen (2) an der Auslassstation (12),
**dadurch gekennzeichnet, dass** es ferner die folgenden Schritte umfasst:
- Detektieren eines Vorliegens einer Packung (2), die in Kürze an der Auslassstation (12) freigegeben werden soll, und
- Erzeugen eines zweiten Signals, das dem Vorliegen der Packung (2) an der Auslassstation (12) zugeordnet ist,
wobei die Förderbänder (13) auch in Abhängigkeit von dem zweiten Signal gesteuert werden.

14. Verfahren nach Anspruch 13, wobei die Förderbänder (13) so gesteuert werden, dass jede Packung (2) an der Auslassstation (12) mit einer vorbestimmten Geschwindigkeit freigegeben wird.

15. Verfahren zum Anbringen von Kappen (24) an Packungen (2) eines gießfähigen Produkts, umfassend das Verfahren zum Fördern der Packungen (2) nach einem der vorhergehenden Ansprüche von 13 bis 14, wobei das Verfahren zum Fördern ferner die folgenden Schritte umfasst:
- Vorschieben der an der Auslassstation (12) freigegebenen Packungen (2) zu einem Hilfsförderer (19), wobei der Hilfsförderer (19) eine Vielzahl von Sitzen (20) aufweist, die mit einer definierten Vorschubgeschwindigkeit entlang mindestens einer Hilfsbahn (B) vorgeschoben werden,
- Zuführen jeder Packung (2) zu einem entsprechenden Sitz (20),
- Vorschieben der Packungen (2) zu und innerhalb einer Verschließvorrichtung (8) mittels des Hilfsförderers (19),
wobei das Verfahren zum Anbringen von Kappen ferner den folgenden Schritt umfasst:
- Anbringen einer jeweiligen Kappe (24) auf jede Packung (2) mittels mindestens einer Kappenanbringvorrichtung (9a).

## Revendications

1. Appareil (7) de transport destiné à transporter une succession d'emballages (2) d'un produit versable le long d'au moins un trajet (A) d'avancement; l'appareil (7) de transport comportant :
- au moins un système (10) de transport à bande configuré pour faire avancer les emballages (2) le long d'une partie (A1) du trajet (A) d'avancement et entre un poste (11) d'entrée au niveau duquel le système (10) de transport à bande reçoit les emballages (2) et un poste (12) de sortie au niveau duquel le système (10) de transport à bande libère les emballages (2) ; et
- une unité de commande (CU) configurée pour commander le fonctionnement du système (10) de transport à bande ; le système (10) de transport à bande comportant deux bandes transporteuses (13) espacées l'une par rapport à l'autre, avançant le long de trajets respectifs (L1) et configurées pour interagir avec les emballages (2) avançant le long de la partie (A1) du trajet (A) d'avancement depuis des côtés latéraux opposés de ceux-ci ;
- au moins un premier dispositif (15) de capteur configuré pour détecter au niveau d'un premier poste (16) de détection positionné entre le poste (11) d'entrée et le poste (12) de sortie une présence d'un emballage (2) et pour générer un premier signal associé à la présence de l'emballage (2) détecté ;
l'unité de commande (CU) étant configurée pour accélérer et/ou décélérer les bandes transporteuses (13) sur la base du premier signal
**caractérisé en ce que** l'appareil (7) de transport comporte un second dispositif (17) de capteur agencé au niveau d'un second poste (18) de détection et configuré pour détecter une présence d'un emballage (2) sur le point d'être libéré au niveau du poste (12) de sortie et pour générer un second signal associé à la présence de l'emballage (2) au niveau du poste (12) de sortie.

2. Appareil (7) de transport selon la revendication 1, l'unité de commande (CU) étant configurée pour accélérer et/ou décélérer les bandes transporteuses (13) de telle façon que l'emballage (2) détecté soit libéré au niveau du poste (12) de sortie à une vitesse prédéterminée.

3. Appareil (7) de transport selon la revendication 2, la vitesse prédéterminée étant la même pour chacun des emballages (2) de ladite succession, qui sont détectés par le premier dispositif (15) de capteur.

4. Appareil (7) de transport selon la revendication 3, l'emballage de tête n'étant soumis qu'à une étape d'accélération et une étape de décélération.

5. Appareil (7) de transport selon l'une quelconque des revendications 2 à 4 qui précèdent, le système (10) de transport à bande comportant un ou plusieurs moteurs configurés pour faire avancer les bandes transporteuses (13) le long des trajets (L1) respectifs ;
l'unité de commande (CU) étant configurée pour commander le ou les moteurs de telle façon qu'en cours d'utilisation, le ou les moteurs fassent avancer les bandes transporteuses (13) de manière telle que chaque emballage (2) soit libéré au niveau du poste (12) de sortie à la vitesse prédéterminée et/ou que chaque emballage (2) soit soumis à au moins une étape d'accélération et une étape de décélération.

6. Appareil (7) de transport selon l'une quelconque des revendications précédentes, le second poste (18) de détection coïncidant sensiblement avec le poste (12) de sortie.

7. Appareil (7) de transport selon l'une quelconque des revendications précédentes, comportant en outre les emballages (2) de ladite succession,
chaque emballage (2) présentant une longueur prédéterminée suivant le trajet (A) d'avancement ;
une distance entre le premier poste (16) de détection et le poste (12) de sortie étant supérieure à la longueur prédéterminée de chaque emballage (2).

8. Appareil (7) de transport selon l'une quelconque des revendications précédentes, l'appareil (7) de transport comportant un convoyeur auxiliaire (19) doté d'une pluralité de portées (20), chaque portée (20) étant configurée pour accueillir au moins un emballage (2) respectif, et étant configuré pour faire avancer les portées (20) le long d'un trajet auxiliaire (19) ;
le système (10) de transport à bande étant configuré pour aligner les emballages (2) par rapport aux portées (20) de telle façon que chaque emballage (2) qui est libéré au niveau du poste (12) de sortie soit introduit dans une portée (20) respective.

9. Appareil (7) de transport selon la revendication 8, l'unité de commande (CU) étant configurée pour accélérer et/ou décélérer les bandes transporteuses (13) de telle façon que l'emballage (2) détecté soit libéré au niveau du poste (12) de sortie à une vitesse prédéterminée, le convoyeur auxiliaire (19) étant configuré pour faire avancer les portées (20) à une vitesse d'avancement définie ;
le système (10) de transport à bande étant configuré de telle façon que la vitesse prédéterminée corresponde sensiblement à la vitesse d'avancement définie.

10. Appareil (7) de transport selon la revendication 8 ou 9, chaque emballage (2) étant libéré les uns par rapport aux autres à une distance qui est égale à une distance ou à un multiple de la distance entre les portées (20) .

11. Machine (6) de capsulage destinée à appliquer des bouchons (24) sur des emballages (2) remplis d'un produit versable, la machine (6) de capsulage comportant :
- un appareil (7) de transport selon l'une quelconque des revendications précédentes ; et
- un ou plusieurs dispositifs applicateurs (9a) de bouchons configurés pour appliquer au moins un bouchon (24) à chaque emballage (2) ;
le ou les dispositifs applicateurs (9a) de bouchons étant agencés en aval du système (10) de transport à bande.

12. Installation (1) d'emballage destinée à produire des emballages (2) remplis d'un produit versable, l'installation (1) d'emballage comportant :
- un appareil (4) de formation d'emballages servant à former les emballages (2) et à remplir les emballages (2) avec le produit versable ;
- au moins une machine (6) de capsulage selon la revendication 11.

13. Procédé de transport d'une succession d'emballages (2) d'un produit versable le long d'au moins un trajet (A) d'avancement, le procédé comportant les étapes consistant à :
- faire avancer les emballages (2) le long d'une partie (A1) du trajet (A) d'avancement et entre un poste (11) d'entrée et un poste (12) de sortie au moyen de deux bandes transporteuses (13) espacées l'une par rapport à l'autre et interagissant avec les emballages (2) depuis des côtés latéraux opposés de ceux-ci ;
- détecter au niveau d'un premier poste (15) de détection entre le poste (11) d'entrée et le poste (12) de sortie une présence d'un emballage (2) au niveau du premier poste (15) de détection ; et
- générer un premier signal associé à la présence d'un emballage (2) détecté au niveau du premier poste (15) de détection ;
- commander, sur la base d'au moins le premier signal, les bandes transporteuses (13) ;
- libérer les emballages (2) au niveau du poste (12) de sortie,
**caractérisé en ce qu'**il comporte en outre les étapes suivantes :
- détecter une présence d'un emballage (2) sur le point d'être libéré au niveau du poste (12) de sortie, et
- générer un second signal associé à la présence de l'emballage (2) au niveau du poste (12) de sortie,
les bandes transporteuses (13) étant commandées également en fonction du second signal.

14. Procédé selon la revendication 13, les bandes transporteuses (13) étant commandées de façon à libérer chaque emballage (2) au niveau du poste (12) de sortie à une vitesse prédéterminée.

15. Procédé d'application de bouchons (24) à des emballages (2) d'un produit versable, comportant le procédé de transport des emballages (2) selon l'une quelconque des revendications 13 à 14 qui précèdent, le procédé de transport comportant en outre les étapes consistant à :
- faire avancer les emballages (2) qui sont libérés au niveau du poste (12) de sortie jusqu'à un convoyeur auxiliaire (19); le convoyeur auxiliaire (19) comprenant une pluralité de portées (20) qui avancent à une vitesse d'avancement définie le long d'au moins un trajet auxiliaire (B) ;
- introduire chaque emballage (2) dans une portée (20) respective ;
- faire avancer les emballages (2) jusqu'à et à l'intérieur d'un appareil (8) de capsulage au moyen du convoyeur auxiliaire (19) ;
le procédé d'application de bouchons comportant en outre l'étape consistant à :
- appliquer un bouchon (24) respectif sur chaque emballage (2) au moyen d'au moins un dispositif applicateur (9a) de bouchons.
